# EUROPEAN PATENT APPLICATION

(11) **EP 4 769 656 A1**
(43) Date of publication of application: **01.07.2026**
(21) Application number: 25845044.4
(22) Date of filing: 10.07.2025
(51) Int. Cl.: H01M 10/617, H01M 10/6554, H01M 50/227, H01M 50/342, H01M 50/383, H01M 10/625

(54) **BATTERY MODULE, AND BATTERY PACK AND VEHICLE INCLUDING SAME**

(30) Priority: 26.07.2024 KR 20240099604
(71) Applicant: LG Energy Solution, Ltd., Seoul 07335 (KR)
(72) Inventor: LEE, So-Jeong, Daejeon 34122 (KR); KIM, Chang-Hyun, Daejeon 34122 (KR); NA, Jong-Seung, Daejeon 34122 (KR); PARK, Jin-Soo, Daejeon 34122 (KR); CHA, Hun, Daejeon 34122 (KR)
(74) Representative: BCKIP Part mbB
(86) International application number: PCT/KR2025/010061
(87) International publication number: WO 2026/023947

(57) **Abstract**

The present disclosure relates to a battery module including: a plurality of battery cells; and a cover member configured to at least partially surround outer surfaces of at least some of the plurality of battery cells and to maintain a uniform temperature within the battery cell.

## Description

### TECHNICAL FIELD

The present disclosure relates to a battery module, and a battery pack and vehicle including the same.

This application is based on and claims priority from Korean Patent Application No. 10-2024-0099604, filed on July 26, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

A common method for configuring a battery pack by connecting multiple battery cells in series/parallel is performed by preferentially configuring a battery module including at least one battery cell and then by adding other components to at least one battery module to configure a battery pack or battery rack. Recently, cell-to-pack-type battery packs in which multiple battery cells are directly stored in a pack housing or the like, instead of being modularized, have been manufactured.

Meanwhile, battery modules include cooling plates, such as thermal resin, to cool the plurality of battery cells. For example, the cooling plate is provided on the lower surface of the plurality of battery cells.

In this case, when charging a battery, there may be a significant temperature difference between the bottom of the battery cell, which contacts the cooling plate, and the top or electrode lead side of the battery cell where current is applied. That is, the temperature within the battery cell may not be uniform. This may lead to problems such as reduced battery cell performance or shortened battery life. In addition, battery charging times may increase.

Therefore, there is a need to develop a structure capable of prolong the service life of a battery cell by minimizing the temperature differences within the battery cell.

### DISCLOSURE

### Technical Problem

The present disclosure has been designed to solve the problems of the related art, and therefore the present disclosure is directed to providing a battery module capable of maximizing the performance and lifespan of a battery cell by minimizing the temperature differences within the battery cell, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; and a cover member configured to at least partially surround outer surfaces of at least some of the plurality of battery cells and to maintain a uniform temperature within the battery cell.

The battery module may further include a cooling plate provided on one side of the plurality of battery cells and configured to cool the plurality of battery cells, and the cover member may be configured to be in contact with the cooling plate.

The cover member may include a material capable of at least partially storing thermal energy.

The cover member may include a fiber material.

The cover member may be configured such that two surfaces thereof overlap to cover both sides of the battery cell.

The battery cell may include an electrode assembly, a battery case including a storage portion in which the electrode assembly is mounted and a sealing portion formed by sealing an outer periphery of the storage portion, and an electrode lead electrically connected to the electrode assembly and extending outward from the battery case, and the cover member may be configured to surround the sealing portion where the electrode lead extends outward.

The cover member may be configured to at least partially surround the electrode lead.

The cover member may include a venting portion configured to discharge venting gas generated from the battery cell to the outside.

The venting portion may be provided on a side of a bent portion configured to be bent from the sealing portion of the battery cell, where the electrode lead does not extend outward.

The cover member may include a coupling portion configured to suppress discharge of venting gas generated from the battery cell to the outside.

The coupling portion may be provided on the electrode lead side of the battery cell.

The cover member may be configured such that a single sheet is folded to cover both sides of the battery cell.

According to another aspect of the present disclosure, there is provided a battery pack including a battery module according to the present disclosure.

In addition, According to another aspect of the present disclosure, there is provided a vehicle including a battery module according to the present disclosure.

### Advantageous Effects

According to an aspect of the present disclosure, it is possible to minimize temperature differences within a battery cell by including a cover member configured to maintain a uniform temperature within the battery cell, thereby extending the lifespan of the battery cell. In particular, this aspect of the present disclosure can maximize battery cell performance.

In addition, according to an aspect of the present disclosure, it is possible to transfer heat to the battery cell in a low-temperature environment within the battery module by including a cover member capable of storing thermal energy. Therefore, performance degradation of the battery module can be prevented in a low-temperature environment.

In addition, according to an aspect of the present disclosure, when charging a battery in a low-temperature environment, heat can be transferred to the battery cell to reach the optimal charging temperature. This can minimize the charging time of the battery module.

In addition, according to an aspect of the present disclosure, heat can be continuously circulated without the need for additional power or energy sources. This can maximize energy efficiency.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a perspective view of a battery cell included in a battery module according to an embodiment of the present disclosure.
FIG. 4 is a cross-sectional view of a battery module according to an embodiment of the present disclosure, which may be a cross-sectional view taken along line I - I' in FIG. 1.
FIG. 5 is a perspective view of a cover member included in a battery module according to an embodiment of the present disclosure.
FIG. 6 is a perspective view of a battery cell to which a cover member is applied according to an embodiment of the present disclosure.
FIG. 7 is a perspective view of a battery cell to which a cover member is applied according to another embodiment of the present disclosure.
FIG. 8 is a perspective view of a battery cell to which a cover member is applied according to another embodiment of the present disclosure.
FIG. 9 is a perspective view of a battery cell to which a cover member is applied according to another embodiment of the present disclosure.
FIG. 10 is a diagram illustrating a thermal event occurring in a battery cell to which a cover member is applied according to another embodiment of the present disclosure.
FIG. 11 is a perspective view of a battery cell to which a cover member is applied according to another embodiment of the present disclosure.
FIG. 12 is a perspective view of a cover member included in a battery module according to another embodiment of the present disclosure.
FIG. 13 is a perspective view of a battery cell to which a cover member is applied according to another embodiment of the present disclosure.
FIG. 14 is a diagram illustrating a thermal event occurring in a battery cell to which a cover member is applied according to another embodiment of the present disclosure.
FIG. 15 is a schematic perspective view of a battery pack including a battery module according to an embodiment of the present disclosure.
FIG. 16 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

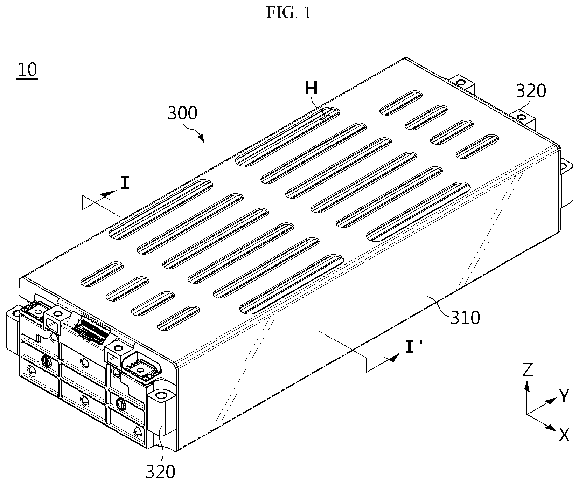

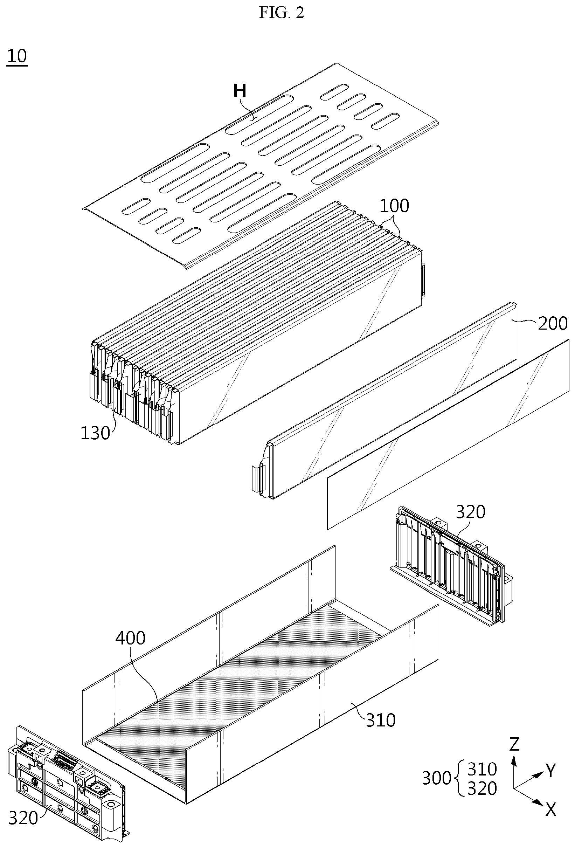

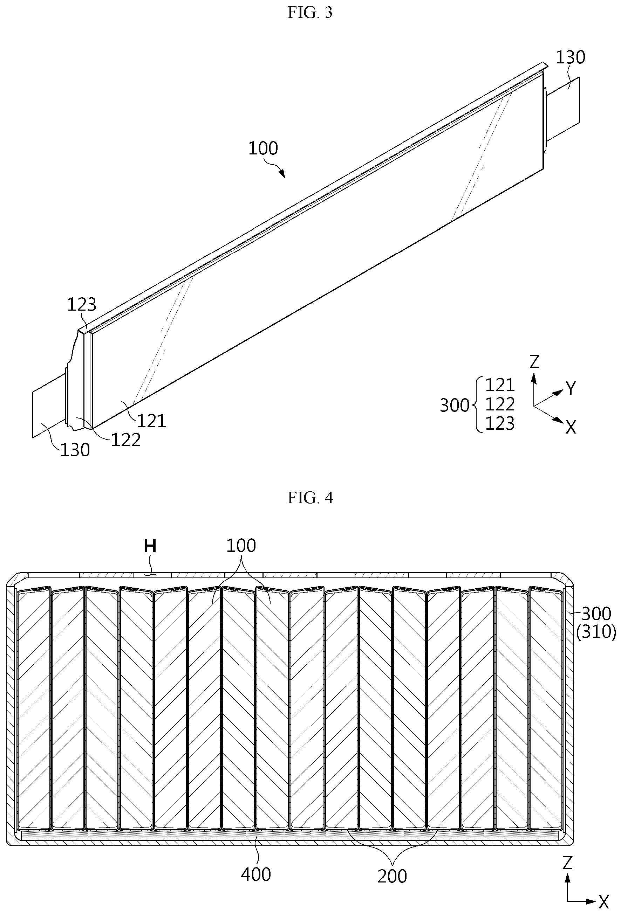

FIG. 1 is an overall perspective view of a battery module according to an embodiment of the present disclosure, and FIG. 2 is an exploded perspective view of a battery module according to an embodiment of the present disclosure. FIG. 3 is a perspective view of a battery cell included in a battery module according to an embodiment of the present disclosure. Furthermore, FIG. 4 is a cross-sectional view of a battery module according to an embodiment of the present disclosure, which may be a cross-sectional view taken along line I - I' in FIG. 1.

Referring to FIGS. 1 to 4, a battery module 10 according to an embodiment of the present disclosure includes a battery cell 100 and a cover member 200.

Referring to FIGS. 2 and 3, the battery cell 100 according to an embodiment of the present disclosure may be a lithium-ion secondary battery. The battery cell 100 may include an electrode assembly 110 (including a positive electrode plate, a negative electrode plate, and a separator), an electrolyte, and a cell case 120. The cell case 120 may be a laminate sheet including a resin layer and a metal layer.

A plurality of battery cells 100 may each have an electrode lead 130. The electrode lead 130 may be connected to the electrode assembly 110 and configured to extend outward from the cell case 120.

A pair of electrode leads 130 may be provided, and the pair of electrode leads 130 may extend from both ends of the battery cell 100, i.e., in the longitudinal direction (±Y direction). In this case, the pair of electrode leads 130 may be a positive electrode lead and a negative electrode lead. If necessary, the battery cell 100 may be configured such that two electrode leads 130 are positioned only at one end in the Y-axis direction, for example, at the end in the +Y-axis direction.

The present disclosure is not limited to a specific type or shape of the battery cell 100, and various battery cells 100 known at the time of filing of the present disclosure may be applied to configure the battery module 10 of the present disclosure. For example, the cell case 120 may be configured in a cylindrical or prismatic form.

For example, as illustrated in FIG. 3, the battery cell 100 according to an embodiment of the present disclosure may be a pouch-type secondary battery. The battery cell 100 may have a long side along the Y-axis direction, a short side along the Z-axis direction, and a thickness in the X-axis direction smaller than the length in the Y-axis or Z-axis direction, thereby forming a roughly rectangular plate-shaped cell. In this case, the electrode lead 130 may be formed on the short side of the battery cell 100 (in the Y-axis direction).

In this case, the cell case 120 may include a storage portion 121 and a sealing portion 122. The storage portion 121 may be configured to accommodate the electrode assembly 100. For example, the storage portion 121 may have a recessed inner space facing the electrode assembly 100, and the electrode assembly 100 may be stored in this inner space. The storage portion 121 may be filled with a liquid, solid, or gel-type electrolyte, depending on the type of battery cell 100.

The sealing portion 122 may be configured by sealing the outer periphery of the storage portion 121. The sealing portion 122 may be formed on three sides, i.e., both short sides of the cell case 120 (in the +/-Y-axis direction) where the electrode leads 130 are located, and one long side (in the +Z-axis direction) between them, excluding the side where the sheet is folded.

A plurality of battery cells 100 may be included. The plurality of battery cells 100 may be electrically connected to each other. For example, the plurality of battery cells 100 may be electrically connected in series and/or in parallel via a busbar or the like.

The plurality of battery cells 100 may be stacked and included in the battery module 10. For example, as illustrated in FIG. 2, the plurality of battery cells 100 may be arranged side by side in the left-right direction (X-axis direction) while standing in the vertical direction (Z-axis direction). In this case, each battery cell 100 may have sealing portions 122 directed in the front-back direction (Y-axis direction) and the upward direction (+Z-axis direction), and a storage portion 121 directed in the left-right direction (X-axis direction).

The cover member 200 may be configured to at least partially surround the outer surfaces of the battery cell 100. The cover member 200 may be configured to be in surface contact with the battery cell 100.

More specifically, the cover member 200 may be made of a flexible material. Therefore, the cover member 200 may be configured to surround the outer surfaces of the battery cell 100 so as to conform to the shape of the battery cell 100. In addition, the cover member 200 may have a very small thickness. For example, the cover member 200 may have a thickness of 0.5 mm or less.

The cover member 200 may be configured to maintain a uniform temperature within the battery cell 100. Specifically, when charging the battery module 10, the temperature of the upper portion of the battery cell 100 or the electrode lead 130 side, where current is applied, may rapidly increase. In this case, the cover member 200 may transfer heat from the high-temperature portion of the battery cell 100 to the lower-temperature portion.

According to the embodiment of the present disclosure, the temperature within the battery cell 100 may be maintained uniformly by providing the cover member 200. Therefore, the temperature differences within the battery cell 100 may be minimized, thereby extending the service life of the battery cell 100. In addition, according to the embodiment of the present disclosure, the performance of the battery cell 100 may be maximized.

The cover member 200 may be configured to surround at least some of the plurality of battery cells 100. That is, the cover member 200 may be configured to group at least some of the plurality of battery cells. A plurality of cover members 200 may be provided. In particular, as disclosed in the embodiment shown in FIG. 4, the cover member 200 may be configured to surround each of the plurality of battery cells 100.

According to the embodiment of the present disclosure, since the cover member 200 is individually provided for each battery cell 100, the temperature differences in each of the plurality of battery cells 100 may be minimized.

Referring to FIGS. 1 to 4, the battery module 10 according to an embodiment of the present disclosure may further include a module case 300. The module case 300 may have an inner space formed therein and accommodate the battery cells 100 within the inner space. The module case 300 of the present embodiment may include a case body 310 and end plates 320 disposed on the front and rear sides of the case body 310.

Here, the case body 310 may include an upper plate, a lower plate, a left plate, and a right plate to form a storage space, and a stack of battery cells 100 may be accommodated within the storage space. The case body 310 may be made of a metal material having rigidity and heat resistance to physically or chemically protect the accommodated battery cells 100.

In addition, the end plate 320 may be coupled to the case body 310 so as to cover an opening of the case body 310. More specifically, the case body 310 may have front and rear openings, and the end plate 320 may be coupled to cover the front and rear openings of the case body 310.

Meanwhile, a venting hole H may be provided in the module case 300. The venting hole H may enable venting toward one direction. For example, a plurality of venting holes H may be formed in the upper surface of the case body. Therefore, directional venting toward the upper side of the battery module 10 may be performed through the venting holes H.

In addition, the battery module 10 according to an embodiment of the present disclosure may further include a cooling plate 400. The cooling plate 400 may be configured to cool a plurality of battery cells 100. The cooling plate 400 may be provided on the inner side of the module case 300. The cooling plate 400 may be provided on one side of the plurality of battery cells 100. The cooling plate 400 may be provided between the plurality of battery cells 100 and the module case 300. For example, as disclosed in the embodiment illustrated in FIG. 4, the cooling plate 400 may be provided on the lower side of the plurality of battery cells 100.

The cover member 200 may be configured to surround the battery cells 100, including the side facing the cooling plate 400. In addition, the cover member 200 may be configured to be in contact with the cooling plate 400. When charging the battery module 10, a significant temperature difference may occur between the side of the battery cell 100 where the cooling plate 400 is provided and the upper side or electrode lead 130 side where current is applied. However, according to the above-implemented configuration of the present disclosure, heat may be transferred by the cover member 200 from the high-temperature portion of the battery cell 100 to the portion where the cooling plate 400 is provided. Accordingly, the temperature differences within the battery cell 100 may be minimized. In particular, according to this aspect of the present disclosure, the service life of the battery cell 100 may be extended, and the performance of the battery cell 100 may be maximized.

The cover member 200 may be configured to store heat when the battery cell 100 generates heat. The cover member 200 may be configured as a thermal energy storage (TES). For example, the cover member 200 may include, at least in part, a material capable of storing thermal energy. The cover member 200 may be formed entirely of a material capable of storing thermal energy, or may be formed partially of a material capable of storing thermal energy. In particular, the upper portion of the cover member 200 may be formed partially of a material capable of storing thermal energy.

For example, the cover member 200 may include a fiber material. Here, the fiber may be a material capable of storing thermal energy. For example, the cover member 200 may include plastic fibers. More specifically, the cover member 200 may be manufactured by weaving plastic fibers. As another example, the cover member 200 may be made of Gore-Tex.

More specifically, heat from the high-temperature portion of the battery cell 100 may be stored in the cover member 200. In addition, this heat may be used to heat the low-temperature portion of the battery cell 100 in a low-temperature environment.

According to the above-implemented configuration of the present disclosure, since the cover member 200 capable of storing thermal energy emitted from each battery module 10 is provided, heat may be transferred to the battery cell 100 in a low-temperature environment. Therefore, performance degradation of the battery module 10 may be prevented in a low-temperature environment.

In addition, according to the above-implemented configuration of the present disclosure, when charging the battery module 10 in a low-temperature environment, heat may be transferred to the battery cell 100 to reach the optimal charging temperature. Therefore, the charging time of the battery module 10 may be minimized.

In addition, according to the above-implemented configuration of the present disclosure, heat may be sustainably circulated without additional power or energy. Therefore, the energy efficiency of the battery module 10 may be maximized.

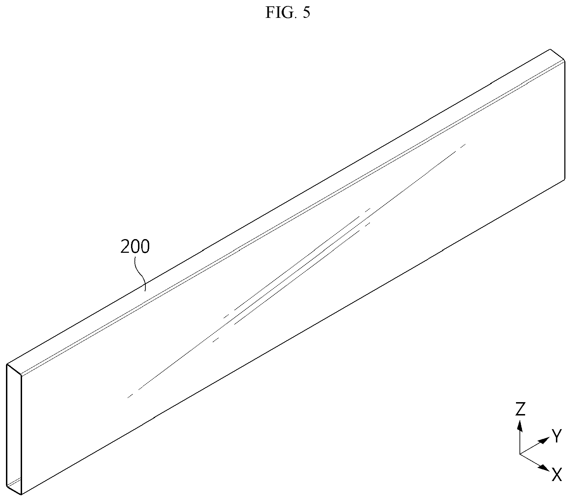

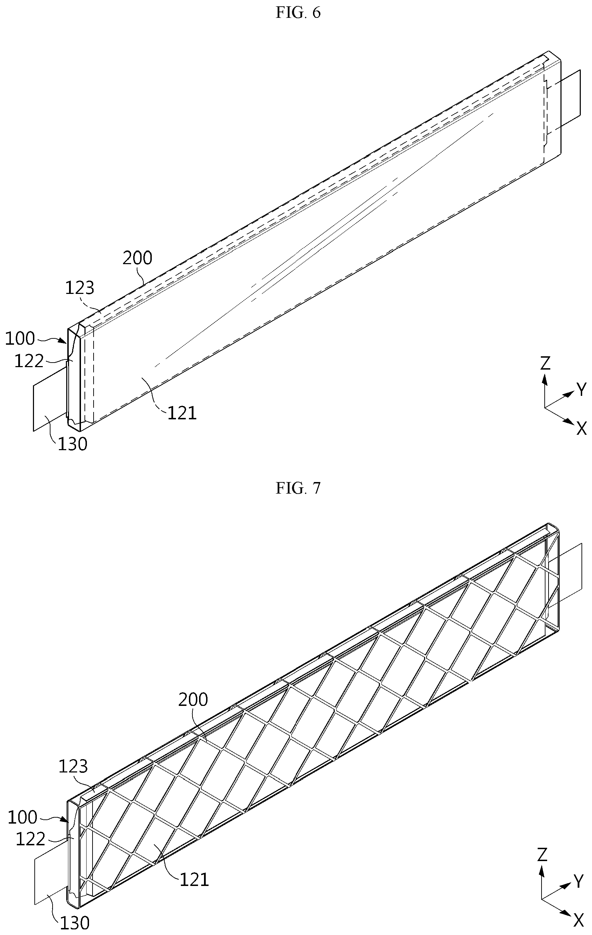

FIG. 5 is a perspective view of a cover member included in a battery module according to an embodiment of the present disclosure, and FIG. 6 is a perspective view of a battery cell to which a cover member is applied according to an embodiment of the present disclosure.

Referring to FIGS. 5 and 6, the cover member 200 may be configured with two overlapping surfaces. The two surfaces of the cover member 200 may be configured to cover both sides of the battery cell 100. The cover member 200 may be configured to be closed at the top and bottom, and have openings at front and rear ends.

The battery cell 100 may be inserted through the openings by sliding in the front-back direction. That is, the battery cell 100 may be inserted through the opening of the cover member 200 such that the cover member 200 covers both left and right sides (storage portion 121) of the battery cell 100. In addition, the battery cell 100 may be vacuum-packed using a blow process. Accordingly, the cover member 200 may be provided in close contact with the battery cell 100.

In this case, the cover member 200 may be configured to cover the sealing portion 122, provided on the upper portion of the battery cell 100, and the lower surface, while the sealing portions 122 (cell terraces) provided in the front and rear ends where the electrode leads 130 of the battery cell 100 extend are exposed to the outside through an opening.

According to the above-described embodiment of the present disclosure, damage to the electrode lead 130 of the battery cell 100 may be minimized in the process of enclosing the battery cell 100 with the cover member 200. In addition, the electrode lead 130 may be electrically connected to other components, such as a busbar, without being obstructed.

In addition, according to the above-implemented configuration of the present disclosure, the cover member 200 and the battery cell 100 may be manufactured separately from each other, and then the battery cell 100 may be easily inserted into the cover member 200. In this case, even if the cover member 200 and the battery cell 100 are not bonded to each other, the battery cell 100 may be slidably inserted and secured to the cover member 200. Therefore, according to the above-implemented configuration of the present disclosure, processability and productivity may be improved.

The cover member 200 may be configured to surround the sealing portion 122 where the electrode lead 130 extends outward, i.e., the cell terrace. For example, as disclosed in the embodiment shown in FIG. 6, the cover member 200 may be configured to cover the sealing portions 122 provided in the front-back direction.

When current is applied to the battery cell 100, the temperature of the portion of the battery cell 100 where the electrode lead 130 extends outward may increase. According to the above-implemented configuration of the present disclosure, since the cover member 200 covers the sealing portion 122 where the electrode lead 130 extends outward, heat may be more effectively transferred from the high-temperature portion to the low-temperature portion. Therefore, the temperature differences within the battery cell 100 may be minimized.

FIG. 7 is a perspective view of a battery cell to which a cover member is applied according to another embodiment of the present disclosure.

As disclosed in the embodiment shown in FIG. 7, the cover member 200 may be configured in the form of a mesh. The cover member 200 may include multiple holes. For example, the cover member 200 may include diamond-shaped holes.

According to the above-implemented configuration of the present disclosure, the cover member 200 is more easily stretched, so even if the cover member 200 is smaller than the battery cell 100, the battery cell 100 may be covered with the cover member 200. Additionally, in this case, the cover member 200 may be in closer contact with the battery cell 100, allowing the cover member 200 to better store the heat from the battery cell 100.

In addition, according to the above-implemented configuration of the present disclosure, the weight and volume of the cover member 200 may be minimized, thereby improving the energy efficiency of the battery module 10.

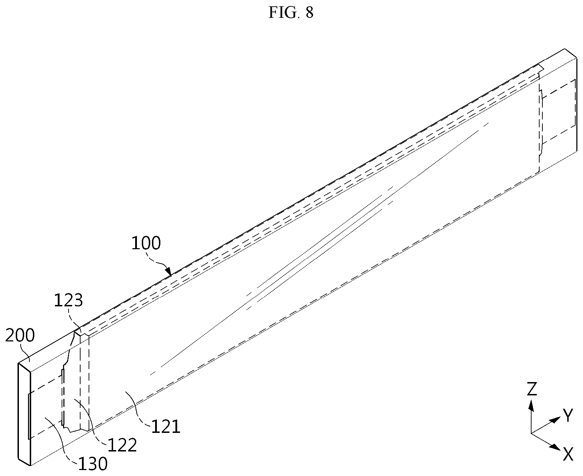

FIG. 8 is a perspective view of a battery cell to which a cover member is applied according to another embodiment of the present disclosure.

The cover member 200 may be configured to at least partially cover the electrode lead 130. Referring to FIG. 8, the cover member 200 may be configured to extend further in the front-back direction (Y-axis direction) in which the electrode lead 130 extends outward. The cover member 200 may be configured to cover both surfaces of the electrode lead 130 in the left-right direction.

When current is applied to the battery cell 100, the temperature of the portion of the battery cell 100 corresponding to the electrode lead 130 may increase. According to the above-implemented configuration of the present disclosure, since the cover member 200 at least partially covers the electrode lead 130, heat may be more effectively transferred from the electrode lead 130 to the low-temperature portion of the battery cell 100. Therefore, the temperature differences within the battery cell 100 may be minimized.

In addition, the cover member 200 may be made of an insulating material. According to the above-implemented configuration of the present disclosure, it is possible to minimize the contact between electrode leads 130 of different battery cells 100, thereby preventing the occurrence of a short circuit.

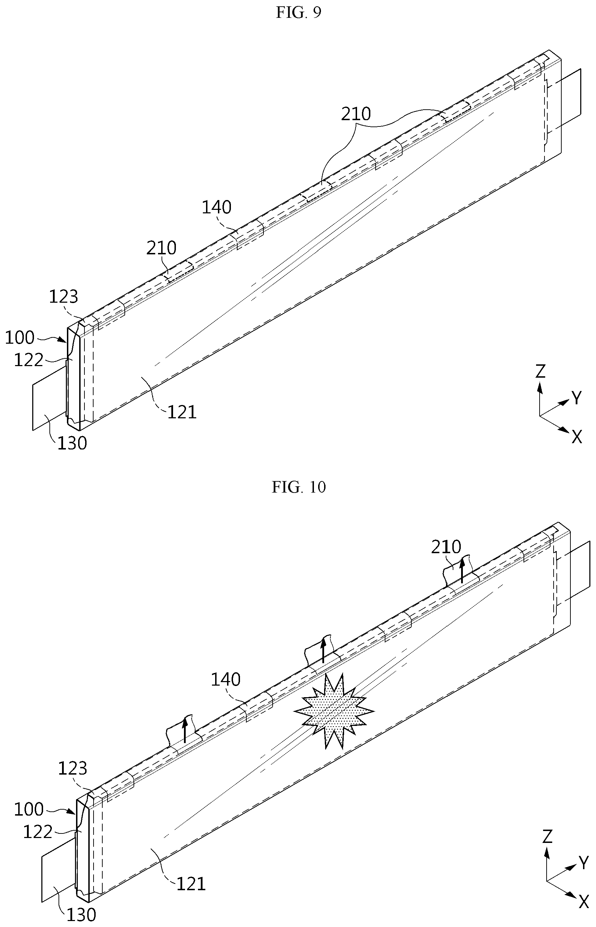

FIG. 9 is a perspective view of a battery cell to which a cover member is applied according to another embodiment of the present disclosure, and FIG. 10 is a diagram illustrating a thermal event occurring in a battery cell to which a cover member is applied according to another embodiment of the present disclosure.

Referring to FIGS. 9 and 10, at least a portion of the cover member 200 may be configured to be openable by venting gas generated from the battery cell 100. Specifically, the cover member 200 may include a venting portion 210. The venting portion 210 may be configured to discharge venting gas generated from the battery cell 100 to the outside. The venting portion 210 may be configured to rupture by the pressure or heat of the venting gas. For example, the venting portion 210 may be configured in the form of a notch or tear line on the cover member 200. In addition, a plurality of venting portions 210 may be provided.

According to the above-implemented configuration of the present disclosure, when a thermal event occurs in a specific battery cell 100, the cover member 200 configured to surround the specific battery cell 100 may rupture to open the venting portion 210. Therefore, venting gas and the like may be discharged to the outside through the open venting portion 210 (see FIG. 10).

In addition, the cover member 200 may prevent the venting gas discharged to the outside from moving toward other battery cells 100. That is, the venting portion 210 of the cover member 200, which is configured to surround a battery cell 100 where a thermal event has not occurred, may remain closed without being opened. Therefore, thermal propagation to neighboring battery cells 100 may be minimized, thereby effectively preventing or delaying the propagation of thermal runaway within the battery module 10.

The battery cell 100 may include a bent portion 123. The bent portion 123 may be configured to be bent from the sealing portion 122 where the electrode lead 130 does not extend outward. That is, the bent portion 123 may be provided on the sealing portion 122 where the electrode lead 130 is not provided. The bent portion 123 may be configured to be bent twice from the sealing portion 122 in the widthwise direction.

In addition, the battery cell 100 may include a tape 140. The tape 140 may be attached to the bent portion 123 to secure the bent portion 123 in the bent state. The tape 140 may be attached to the battery case 300 so as to wrap the bent portion 123 along the thickness direction (X-axis direction) of the battery cell 100.

The tape 140 may be configured to be torn by gas generated within the cell case 120. The bent portion 123 may be configured to unfold due to tension when the tape 140 is torn by the gas. Therefore, gas generated within the battery cell 100 may be vented to the outside through the unfolded bent portion 123.

According to the above-implemented configuration of the present disclosure, gas or the like generated from the battery cell 100 may be induced to vent toward the side where the bent portion 123 is provided. For example, the bent portion 123 may be provided to face upward toward the position of the venting hole H of the battery module 10, thereby preventing venting in all directions of the battery cell 100, including the front-back direction. Therefore, directional venting may be performed toward the upper portion of the battery module 10, thereby enhancing the safety of the battery module 10 by controlling the venting direction.

Referring to the embodiments illustrated in FIGS. 9 and 10, the venting portion 210 may be provided on the side of the bent portion 123. That is, the venting portion 210 may be configured to face the bent portion 123.

According to the above-implemented configuration of the present disclosure, since the venting portion 210 is provided on the side of the bent portion 123 where venting is induced, venting gas may be directly discharged from the bent portion 123 to the venting portion 210. Therefore, the venting gas may be discharged more quickly to the outside, thereby reducing the internal pressure of the battery cell 100.

In particular, the venting portion 210 may be provided between the tapes 140. According to the above-implemented configuration of the present disclosure, even if the tapes 140 are not broken during venting of the battery cell 100, the venting gas discharged through the space between the tapes 140 may be more quickly discharged to the outside.

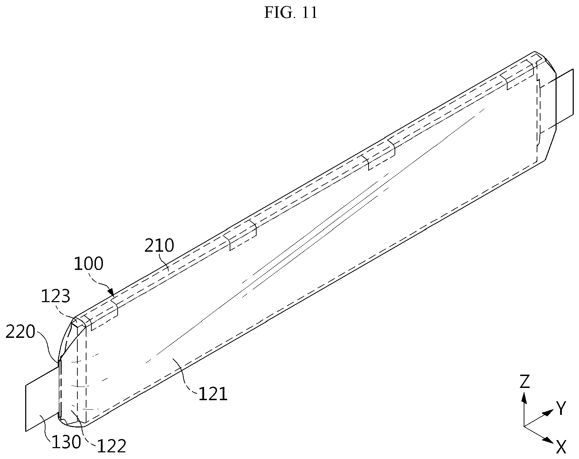

FIG. 11 is a perspective view of a battery cell to which a cover member is applied according to another embodiment of the present disclosure.

The cover member 200 may be configured to suppress discharge of venting gas through a side where the venting portion 210 is not provided, for example, through the openings of the cover member 200. For example, as disclosed in the embodiment shown in FIG. 11, the cover member 200 may have a coupling portion 220. The coupling portion 220 may be configured to prevent venting gas generated in the battery cell 100 from being discharged to the outside.

According to the above-implemented configuration of the present disclosure, venting gas may be prevented from being discharged through a portion other than the venting portion 210. Therefore, venting may be further induced only through the venting portion 210, thereby preventing venting gas from spreading in all directions within the module case 300.

Specifically, the coupling portion 220 may be provided in the opening of the cover member 200. Specifically, the coupling portion 220 may be configured to block the opening of the cover member 200. The cover member 200 may have front and rear openings, and the coupling portion 220 may be configured such that the edges of the two opposing sides overlap and are sealed. The coupling portion 220 may be formed of an adhesive, adhesive tape, an iron core, or the like.

Specifically, the coupling portion 220 may be provided on the electrode lead 130 of the battery cell 100. The coupling portion 220 may be provided in the opening of the cover member 200, excluding the portion from which the electrode lead 130 extends outward. That is, as illustrated in FIG. 11, the coupling portion 220 may be configured to seal the cover member 200 at the upper and lower sides of the electrode lead 130.

When a thermal event occurs in the battery cell 100, internal pressure may be concentrated on the cell terrace where the electrode lead 130 is provided, potentially causing venting gas to be discharged toward the electrode lead 130. In such a case, heat may be transmitted to a busbar frame or other battery modules 10 provided in the front-back direction of the battery cell 100. However, according to the above-implemented configuration of the present disclosure, since the coupling portion 220 of the cover member 200 is provided on the electrode lead 130, it is possible to effectively suppress the discharge of venting gas toward the electrode lead 130. Therefore, venting may be further induced through the bent portion 123.

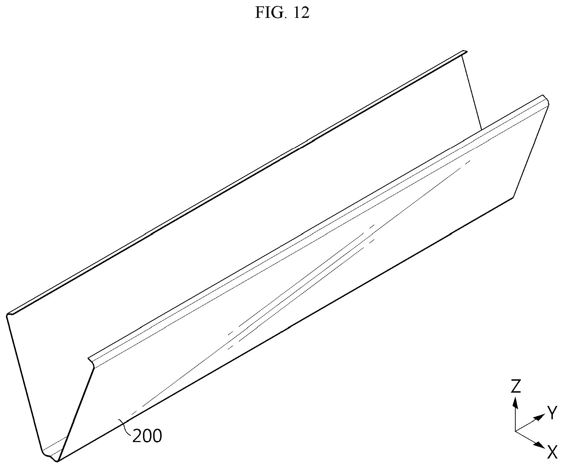

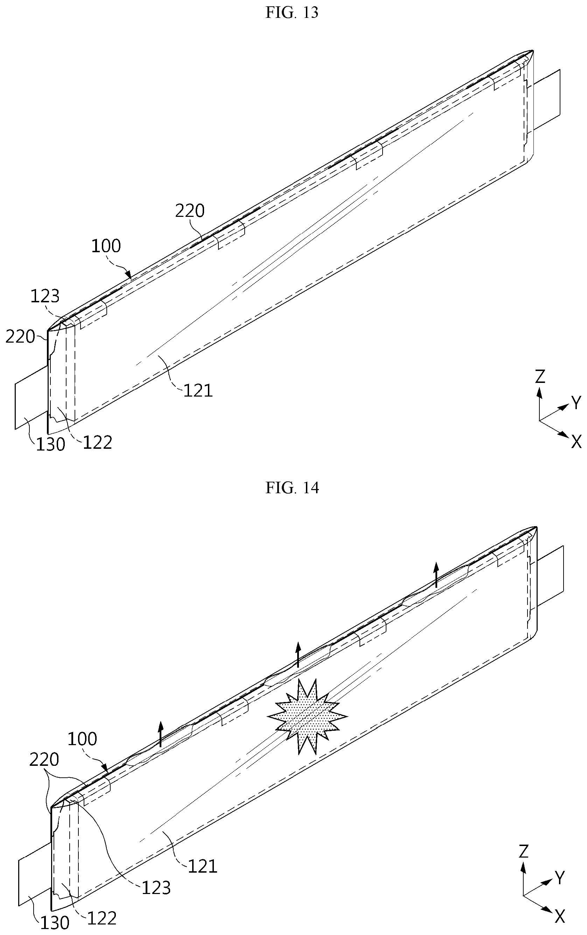

FIG. 12 is a perspective view of a cover member included in a battery module according to another embodiment of the present disclosure. In addition, FIG. 13 is a perspective view of a battery cell to which a cover member is applied according to another embodiment of the present disclosure, and FIG. 14 is a diagram illustrating a thermal event occurring in a battery cell to which a cover member is applied according to another embodiment of the present disclosure.

In another embodiment, the cover member 200 may be configured by folding a single sheet. The cover member 200 may be configured to fold and cover both sides of the battery cell 100. For example, as disclosed in the embodiments shown in FIGS. 12 and 13, after the battery cell 100 is seated on the center of the cover member 200, the cover member 200 may be folded to cover the left and right sides of the storage portion 121 of the battery cell 100.

In this case, the cover member 200 may have three openings on their sides. For example, the cover member 200 may cover the lower surface of the battery cell 100, and the sealing portion 122 (cell terrace) provided at the front and rear ends, where the electrode lead 130 of the battery cell 100 extends outward, and the bent portion 123 provided on the upper portion may be exposed through the openings.

In this case, the coupling portion 220 may be provided on the side of the bent portion 123. Accordingly, the cover member 200 may be fixed while enclosing the battery cell 100.

In addition, the coupling portion 220 may be provided on the electrode lead 130 side. The coupling portion 220 may be provided at a position facing the tape 140. According to the above-implemented configuration of the present disclosure, when a thermal event occurs in the battery cell 100, venting gas may be guided to be discharged into the space between the tapes 140 (see FIG. 14). Accordingly, the venting gas generated in the battery cell 100 may be further guided upward, thereby preventing the venting gas from spreading in all directions.

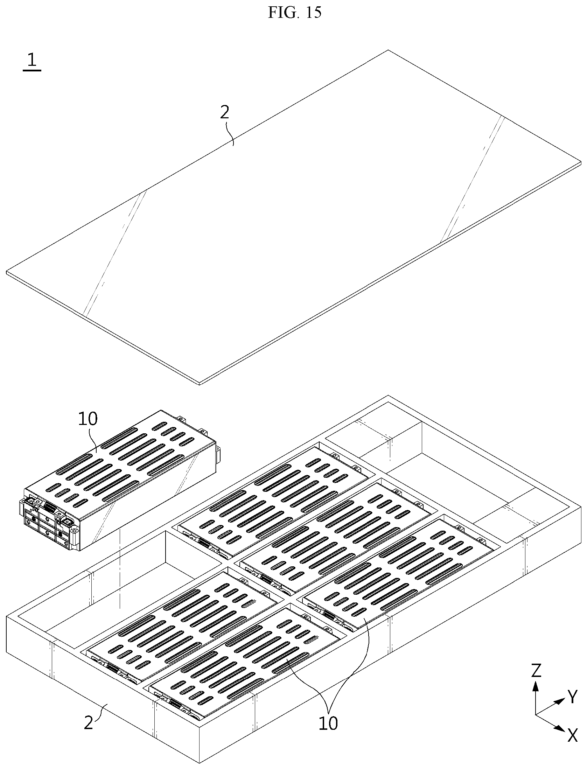

FIG. 15 is a schematic perspective view of a battery pack including a battery module according to an embodiment of the present disclosure.

A battery pack 1 according to an embodiment of the present disclosure may include one or more battery modules 10 according to an embodiment of the present disclosure described above. The battery pack 1 according to the present disclosure may further include components of the battery pack known at the time of filing of the present disclosure, such as a BMS (Battery Management System) for integrated control of the charging and discharging of one or more battery modules 10, a current sensor, and a fuse.

Additionally, in the battery pack 1 according to the present disclosure, the module case 300 described above may function as the pack case 2. In this case, the components of the battery pack 1, such as a BMS, a busbar, and a relay, may be included within the module case 300. In this case, it is also called a cell-to-pack type because the battery cells 100 are directly housed within the pack case.

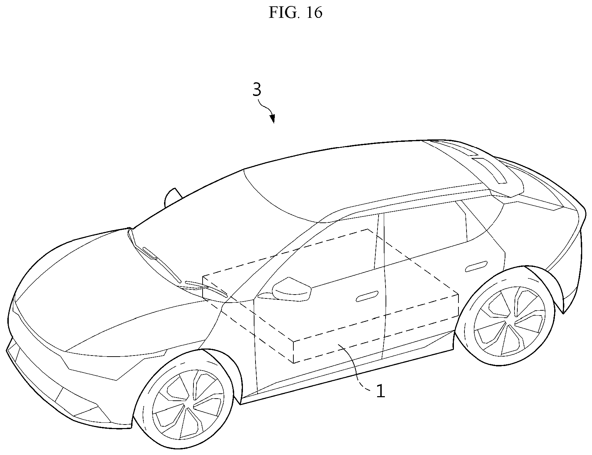

FIG. 16 is a schematic perspective view of a vehicle including a battery pack according to an embodiment of the present disclosure.

A vehicle 3 according to an embodiment of the present disclosure may include one or more battery packs 1 according to an embodiment of the present disclosure or one or more battery modules 10 according to an embodiment of the present disclosure. The vehicle 3 according to the present disclosure may be, for example, an electric vehicle, a hybrid vehicle, or a plug-in hybrid vehicle. The vehicle 3 may include a four-wheel vehicle and a two-wheel vehicle. The vehicle 3 may operate by receiving power from the battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells; and
a cover member configured to at least partially surround outer surfaces of at least some of the plurality of battery cells and to maintain a uniform temperature within the battery cell.

2. The battery module of claim 1,
further comprising a cooling plate provided on one side of the plurality of battery cells and configured to cool the plurality of battery cells,
wherein the cover member is configured to be in contact with the cooling plate.

3. The battery module of claim 1,
wherein the cover member comprises a material capable of at least partially storing thermal energy.

4. The battery module of claim 1,
wherein the cover member comprises a fiber material.

5. The battery module of claim 1,
wherein the cover member is configured such that two surfaces thereof overlap to cover both sides of the battery cell.

6. The battery module of claim 1,
wherein the battery cell comprises
an electrode assembly,
a battery case comprising a storage portion in which the electrode assembly is mounted and a sealing portion formed by sealing an outer periphery of the storage portion, and
an electrode lead electrically connected to the electrode assembly and extending outward from the battery case, and
wherein the cover member is configured to surround the sealing portion where the electrode lead extends outward.

7. The battery module of claim 6,
wherein the cover member is configured to at least partially surround the electrode lead.

8. The battery module of claim 1,
wherein the cover member
comprises a venting portion configured to discharge venting gas generated from the battery cell to an outside.

9. The battery module of claim 8,
wherein the venting portion is provided on a side of a bent portion configured to be bent from the sealing portion of the battery cell, where the electrode lead does not extend outward.

10. The battery module of claim 1,
wherein the cover member
comprises a coupling portion configured to suppress discharge of venting gas generated from the battery cell to an outside.

11. The battery module of claim 10,
wherein the coupling portion is provided on the electrode lead side of the battery cell.

12. The battery module of claim 1,
wherein the cover member is configured such that a single sheet is folded to cover both sides of the battery cell.

13. A battery pack comprising a battery module according to any one of claims 1 to 12.

14. A vehicle comprising a battery module according to any one of claims 1 to 12.
